# DEMANDE DE BREVET EUROPEEN

(11) **EP 3 725 650 A1**
(43) Date de publication de la demande: **21.10.2020**
(21) Numéro de dépôt: 20169515.2
(22) Date de dépôt: 15.04.2020
(51) Int. Cl.: B62D 29/00, B60J 5/10, B60J 5/04

(54) **INSERT DE RENFORT EN MATÉRIAU COMPOSITE MUNI D'ÉLÉMENTS D'ANCRAGE**

(30) Priorité: 15.04.2019 FR 1904011
(71) Demandeur: Compagnie Plastic Omnium, 69007 Lyon (FR)
(72) Inventeur: LETERRIER, Franck, 01150 Sainte-Julie (FR); HUMMER, Emilien, 01150 Sainte-Julie (FR); PRETOT, Sébastien, 01800 Villieu Loyes Mollon (FR)
(74) Mandataire: LLR

(57) **Abrégé**

L'invention concerne un élément de renforcement (100) pour pièce de carrosserie (200) en matière plastique composite, formant un insert apte à être au moins partiellement surmoulé dans la pièce de carrosserie (200), l'élément de renforcement (100) comportant une paroi (300) délimitée par un contour (330). L'élément de renforcement (100) est réalisé en matière plastique composite, et au moins une partie du contour (330) comporte des encoches (400) d'ancrage mécanique de surmoulage.

## Description

L'invention concerne le domaine de l'industrie automobile, et en particulier le domaine des pièces de carrosserie en matière plastique localement renforcées par des inserts surmoulés.

En particulier l'invention concerne un élément de renforcement de type insert en matière plastique composite, apte à être surmoulé localement dans une pièce de carrosserie afin de la renforcer mécaniquement.

On connaît, dans l'état de la technique, un ouvrant arrière, de type hayon notamment, réalisé en matière plastique, comprenant une peau extérieure d'aspect, et une doublure intérieure de structure réalisée en matière thermoplastique chargée. La matière thermoplastique constituant la doublure est par exemple chargée de fibres de verre ou de talc pour accroître ses propriétés de résistance.

La doublure de hayon subit de nombreuses contraintes mécaniques lors de sa fabrication, principalement des déformations géométriques inhérentes au procédé de moulage, et des sollicitations mécaniques lors de son utilisation une fois assemblée sur le véhicule.

Afin de de mieux supporter les efforts mécaniques de fonctionnement sur véhicule, la doublure intérieure est généralement renforcée par des éléments de renfort en tôle obtenue par un procédé classique de découpe, emboutissage, poinçonnage. Ces éléments de renfort peuvent être surmoulés dans la matière thermoplastique de la doublure au niveau des zones charnières, rotules ou serrure, afin de pallier les différents efforts produits par les équipements (vérins, butées ou joint d'étanchéité) et qui génèrent des déformations.

L'efficacité en renforcement de l'insert surmoulé dépend de la qualité et de la robustesse du couplage mécanique entre la pièce de carrosserie et l'insert de renfort.

Il est connu d'effectuer un blocage mécanique de l'insert de renfort dans la pièce, en encapsulant au moins partiellement l'insert surmoulé dans la matière plastique. L'encapsulage consiste à surmouler l'insert en recouvrant au moins partiellement deux de ses faces opposées, ou de façon plus générale, qu'en un point donné de l'insert, il est surmoulé de part et d'autre de ce point.

Cet encapsulage peut aussi se situer en périphérie de l'insert surmoulé, la matière surmoulée passant d'une face à l'autre de la pièce en contournant et recouvrant le bord pièce.

Un tel encapsulage seul ne représente pas une solution totalement satisfaisante en termes d'ancrage mécanique.

Afin d'améliorer l'ancrage mécanique, il est connu d'effectuer un blocage mécanique de l'insert de renfort dans la pièce, en munissant l'insert surmoulé d'orifices traversant l'épaisseur de la pièce, et au travers desquels passe la matière plastique pour assurer ainsi un maintien mécanique des deux éléments (insert et pièce). Ces trous de passage sont facilement obtenus avec les procédés classiques de production d'un insert en tôle, mais présentent des difficultés industrielles avec un insert en composites.

Ainsi, les solutions existantes ne sont pas totalement satisfaisantes, et des solutions pour améliorer l'ancrage de tels inserts s'avèrent nécessaires.

L'invention a notamment pour but de fournir une telle solution, et de remédier aux inconvénients des solutions existantes, en fournissant un insert de renfort en matière plastique composite, muni d'éléments d'ancrage mécanique de surmoulage. On entend par matière plastique composite chargée une matière constituée d'une résine thermoplastique ou thermodurcissable, contenant des charges minérales ou naturelles, telles que du talc, et/ou contenant des fibres de renfort, telles que des fibres de carbone, de verre, de lin, de chanvre etc.

A cet effet l'invention a pour objet un élément de renforcement pour pièce de carrosserie en matière plastique composite, formant un insert apte à être au moins partiellement surmoulé dans la pièce de carrosserie, l'élément de renforcement comportant une paroi délimitée par un contour. L'élément de renforcement est réalisé en matière plastique composite, et au moins une partie du contour comporte des encoches d'ancrage mécanique de surmoulage.

L'élément de renfort peut en outre comporter l'une ou plusieurs des caractéristiques suivantes, prises seules ou en combinaison :
- les encoches d'ancrage mécanique ont une forme comportant un resserrement ;
- les encoches d'ancrage mécanique ont une forme sensiblement évasée en partant du bord du contour ;
- les encoches d'ancrage mécanique sont distribuées régulièrement sur ladite partie du contour ;
- la partie du contour comportant les encoches comporte une surface d'appui formant un prolongement de ladite paroi ;
- ladite surface d'appui a une épaisseur inférieure à l'épaisseur des reliefs ;
- la paroi comporte une première face, et une seconde face opposée à la première face, les encoches d'ancrage mécanique de surmoulage étant formées sur la première face et/ou sur la seconde face ;
- un premier ensemble d'encoches d'ancrage mécanique de surmoulage est formé sur la première face, un second ensemble d'encoches d'ancrage mécanique de surmoulage est formé sur la seconde face, les encoches d'une face étant en opposition des encoches de l'autre face ;
- la paroi de l'élément de renforcement comporte un organe d'ancrage mécanique de surmoulage faisant saillie sur la paroi dans une direction localement non perpendiculaire à ladite paroi ;
- l'organe d'ancrage mécanique forme un tenon sur la paroi.

L'invention concerne également une pièce de carrosserie de véhicule automobile, réalisée en matière plastique, et comportant un élément de renforcement selon l'invention.

La pièce de carrosserie peut en outre comporter l'une ou plusieurs des caractéristiques suivantes, prises seules ou en combinaison :
- l'élément de renforcement forme un insert encapsulé par la matière plastique de la pièce de carrosserie sur au moins une partie du contour de la paroi, et de préférence sur tout le contour ;
- la matière plastique de la pièce de carrosserie recouvre la surface d'appui et comble les encoches ;
- la matière plastique de la pièce de carrosserie recouvre le bord de la paroi, au niveau du contour.

Selon un mode de réalisation, la pièce de carrosserie constitue une doublure de hayon.

### Brève description des figures

L'invention sera mieux comprise à la lecture de la description qui va suivre, donnée uniquement à titre d'exemple et faite en se référant aux dessins annexés dans lesquels :
[Fig. 1] la figure 1 illustre un exemple d'une doublure de hayon, comportant des inserts de renfort surmoulés, formant des éléments de renforcement au niveau de zones d'effort de la doublure ;
[Fig. 2] la figure 2 est un détail de la figure 1, permettant d'illustrer la position d'un insert latéral de renfort dans une zone de montant latéral et de charnière de la doublure ;
[Fig. 3] la figure 3 illustre un exemple d'un élément de renfort conforme à l'invention : un insert latéral surmoulé ;
[Fig. 4] la figure 4 illustre un détail de l'élément de renfort de la figure 3, comportant un organe d'ancrage mécanique de surmoulage muni d'une surface d'appui et d'encoches d'ancrage, sur les bordures de l'insert ;
[Fig. 5] la figure 5 illustre le détail de la figure 4, vu de dessous ;
[Fig. 6] la figure 6 illustre l'ancrage mécanique entre la pièce et l'organe d'ancrage mécanique de surmoulage muni d'une surface d'appui et d'encoches d'ancrage ;
[Fig. 7A] la figure 7A,
[Fig. 7B] la figure 7B, et
[Fig. 7C] la figure 7C illustrent l'ancrage mécanique entre la pièce et l'organe d'ancrage mécanique de surmoulage faisant saillie sur la paroi.

### Description détaillée

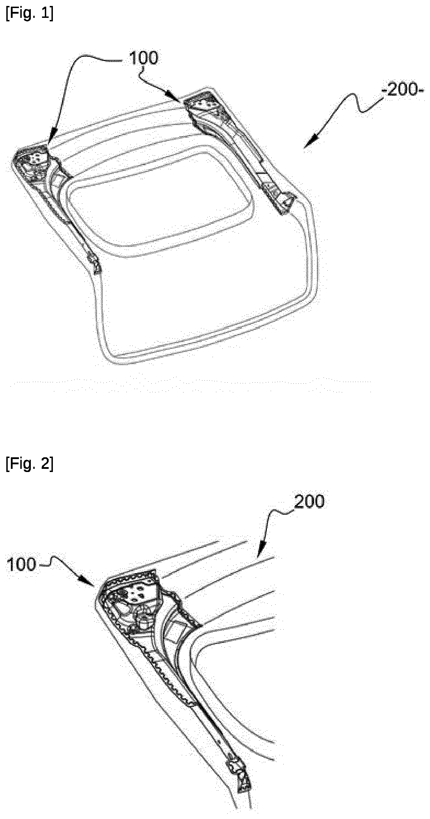

La figure 1 illustre un exemple d'une pièce de carrosserie 200 en matière plastique, de préférence en matière thermoplastique, comportant un élément de renforcement 100 selon l'invention. Selon cet exemple, il s'agît d'une doublure de hayon 200, comportant des inserts de renfort surmoulés, formant des éléments de renforcement au niveau de zones d'effort de la doublure : montants latéraux, zones de charnières, zones de fixation des vérins, zones de serrure...

La figure 2 illustre un détail de la figure 1, illustrant un élément de renforcement 100 formant un insert de renfort surmoulé dans la doublure de hayon 200, au niveau d'un montant latéral dans une zone s'étendant de la charnière à la rotule d'articulation et fixation du vérin.

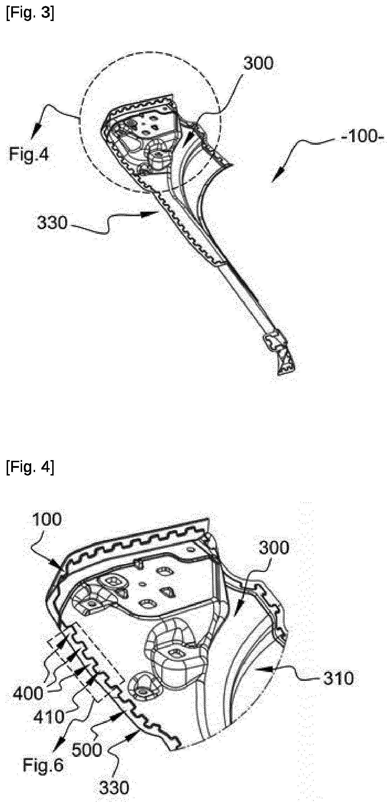

On se réfère maintenant à la figure 3, qui illustre un exemple d'élément de renforcement 100 selon l'invention. Cet élément de renforcement 100 constitue un insert, apte à être au moins partiellement surmoulé dans la pièce de carrosserie 200. L'élément de renforcement 100 comporte une paroi 300 délimitée par un contour 330. Un contour constitue la limite externe de la surface d'un corps. Ainsi, le contour 330 constitue la limite externe de la paroi 300, c'est-à-dire ce que l'on appelle aussi la fin de pièce de l'élément de renforcement 100.

La forme générale de la paroi 300 est contrainte par la forme de la zone de la pièce de carrosserie 200 au niveau de laquelle il est surmoulé.

Cet élément de renforcement 100 est réalisé en matière plastique composite.

La matière plastique composite est de préférence une matière thermodurcissable chargée, contenant des charges minérales ou naturelles, telles que du talc, et/ou contenant des fibres de renfort, telles que des fibres de carbone, de verre, de lin, de chanvre etc.

Comme illustré sur les figures, et notamment la figure 4, au moins une partie du contour 330 de la paroi 300 comporte des encoches 400 d'ancrage mécanique du surmoulage.

On entend par « encoche » une rainure très courte par rapport à la dimension de l'insert 100. Une encoche forme ainsi une entaille dans la paroi 300, débouchant au niveau du contour 330. Une encoche forme donc un évidement, ayant une géométrie donnée, réalisée dans l'épaisseur de la paroi 300, c'est-à-dire une forme en creux qui ne traverse pas totalement l'épaisseur de l'élément de renforcement 100.

Les encoches 400 sont destinées à être remplies par la matière plastique de la pièce 200 lors du surmoulage. Elles s'opposent ainsi à une désolidarisation du surmoulage lorsque la pièce est soumise à des contraintes mécaniques comme une traction, une flexion, un effet de cisaillement ou de vrillage de l'insert 100 par rapport à la pièce 200 dans un plan sensiblement parallèle au plan local de la paroi 300.

Selon un mode de réalisation avantageux, les encoches 400 ont, en projection dans le plan local de la paroi 300, une forme évasée en partant du bord pièce, ayant ainsi, par exemple une forme de type « pièce de puzzle », ou une forme en queue d'aronde, en trapèze. Cette forme permet encore d'améliorer l'ancrage mécanique de surmoulage, en s'opposant à une désolidarisation de la pièce et de l'insert selon un mouvement de traction ou cisaillement sensiblement parallèle à la surface d'appui 500, dans une direction sensiblement perpendiculaire au contour de la pièce. Cette fonction anti-arrachement est obtenue par toutes formes d'encoche dont les flancs latéraux comportant entre eux, en projection dans le plan local de la paroi 100, un point de resserrement, ce point de resserrement étant situé de préférence plus proche du contour de la pièce que du fond de l'encoche.

Deux encoches 400 successives définissent entre elles un relief 410 ayant, en projection dans le plan local de la paroi 300, une forme complémentaire et contrainte par celle de ses deux encoches adjacentes.

Ainsi, au moins une partie du contour 330 de la paroi 300 comporte une succession d'encoches 400 et de reliefs 410, définissant une forme typique dite « en créneaux ». Selon un exemple de réalisation (figures 3, 4, 5), les encoches 400 d'ancrage mécanique sont distribuées selon un pas sensiblement régulier le long d'au moins une partie du contour 330 de la paroi 300.

On comprend alors que cette alternance d'encoches 400 et de reliefs 410, a pour fonction de s'opposer à des mouvements relatifs de l'insert 100 par rapport à la pièce 200, dans une direction sensiblement perpendiculaire au plan local de la paroi 300. En effet, lorsque le surmoulage encapsule les deux faces 310, 320 (dessus et dessous), et du fait que les encoches 400 entre chaque relief 410 ne sont pas traversantes dans l'épaisseur pièce (les creux des reliefs sont bouchés), un mouvement de la pièce 200 dans une direction sensiblement perpendiculaire au plan local de la paroi 300 est bloqué par la matière sous chaque encoche 400.

Les encoches 400 peuvent avoir toute forme, et donc les reliefs 410 formés entre ces encoches 400 peuvent également avoir toute forme. Par exemple, sur les figures 3, 4 et 5, les encoches 400 ont une même forme, sensiblement en trapèze et dessinent des reliefs 410 aussi en trapèze de forme complémentaire.

La paroi 300 comporte une première face 310, et une seconde face 320 opposée à la première face, et les encoches 400 d'ancrage mécanique de surmoulage sont formées sur la première face et/ou sur la seconde face.

Selon un mode de réalisation, l'élément de renforcement 100 comporte des encoches sur les deux faces 310 et 320. Ainsi, un premier ensemble d'encoches 400 d'ancrage mécanique de surmoulage est formé sur la première face 310, un second ensemble d'encoches 400 d'ancrage mécanique de surmoulage est formé sur la seconde face 320. Les encoches 400 d'une face sont en opposition des encoches de l'autre face, c'est-à-dire que chaque encoche d'une face se trouve sensiblement en regard d'un relief de l'autre face. Cette double rangée d'encoches 400 (reliefs 410) permet d'améliorer encore l'ancrage mécanique de surmoulage. Le positionnement en opposition des encoches 400 de chaque rangée permet d'éviter la présence d'une très faible épaisseur de matière au bord de la pièce, cette épaisseur étant ainsi au moins égale à l'épaisseur d'un relief 410.

Selon un mode préféré de réalisation, illustré sur la figure 4 notamment, la partie du contour 330 comportant des encoches 400 comporte également une surface d'appui 500 formant un prolongement de la paroi 300. La surface 500 a, de préférence, une épaisseur inférieure à l'épaisseur des reliefs 410. Selon un mode de réalisation, l'épaisseur de la surface d'appui 500 est sensiblement égale à celle de la paroi 300 restant sous les encoches 400. Ainsi, la surface d'appui 500 peut former un voile d'épaisseur inférieure à 3mm, de préférence inférieure à 2mm.

Selon un exemple de réalisation, illustré sur les figures, cette surface d'appui 500 constitue un prolongement de la paroi 300 constituant le fond des encoches 400.

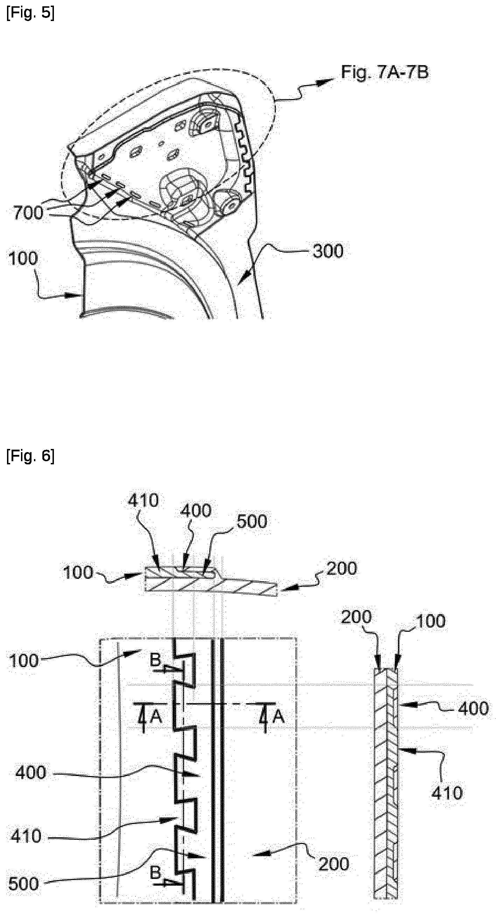

La figure 6 illustre l'ancrage mécanique entre la pièce et l'organe d'ancrage mécanique de surmoulage muni d'une surface d'appui et d'encoches d'ancrage. La figure en bas à gauche, de la figure 6, illustre, vu de dessus, l'ancrage mécanique entre la pièce 200 et l'organe d'ancrage mécanique de surmoulage muni d'une surface d'appui 500 et d'encoches d'ancrage 400. Chaque relief 410 est délimité de part et d'autre par une encoche 400. On comprend que la surface d'appui 500 a également pour fonction de s'opposer à des mouvements relatifs de l'insert 100 par rapport à la pièce 200, dans une direction sensiblement perpendiculaire au plan défini par la surface d'appui 500.

La figure de droite et la figure du haut de la figure 6, représentent deux plans de coupe A-A (en haut), B-B (à droite) indiqués sur la figure gauche de la figure 6. On observe que selon ce mode de réalisation, le surmoulage rempli les encoches 400, sans surmouler les reliefs 410. Bien entendu, le surmoulage pourrait également recouvrir les reliefs 410.

Avantageusement, les encoches 400 et la surface d'appui 500 sont issues de moulage, lors du procédé de moulage de l'élément de renforcement 100.

Les encoches 400 remplies par la matière plastique de la pièce 200 lors du surmoulage, s'opposent ainsi à désolidarisation de l'insert 100 par rapport à la pièce 200 dans un plan sensiblement parallèle à la surface d'appui 500.

Et lorsque la forme des encoches 400 comporte un resserrement dans un plan sensiblement parallèle à la surface d'appui 500, les encoches 400 permettent de s'opposer à l'arrachement de la pièce selon un mouvement de translation sensiblement parallèle à la surface d'appui 500.

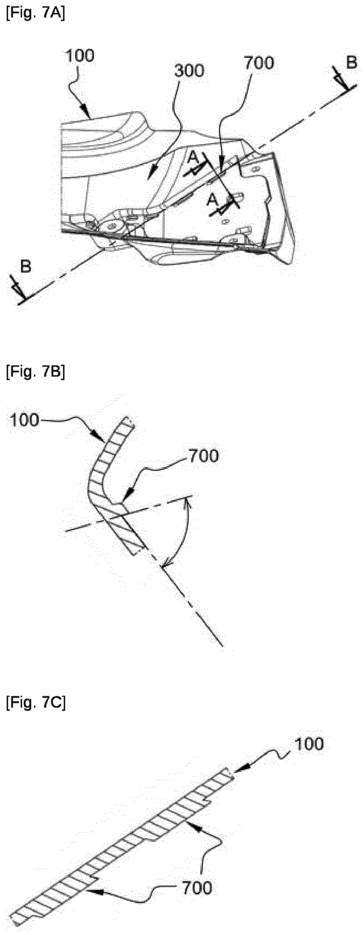

Selon un autre mode de réalisation (figures 5, 7A à 7C), l'élément de renforcement 100 comporte un organe supplémentaire d'ancrage mécanique, de préférence situé en dehors du bord de l'élément de renforcement 100 et des zones du contour comportant des encoches. La paroi 300 de l'élément de renforcement 100 comporte un organe 700 d'ancrage mécanique de surmoulage faisant saillie sur la paroi 300 dans une direction localement non perpendiculaire à la paroi 300.

Cet organe 700 d'ancrage mécanique de surmoulage permet encore d'améliorer l'ancrage mécanique de surmoulage, en s'opposant à l'arrachement de la pièce selon un mouvement de traction en arrachement sensiblement et localement perpendiculaire à la paroi 300. Cet ancrage est d'autant plus efficace que ce tenon est placé dans une zone 316, où il est obtenu par démoulage naturel et dans une direction non perpendiculaire à la surface : cet angle (inférieur à 90°) renforce l'ancrage.

Sur les exemples des figures 5, 7A à 7C, cet organe d'ancrage mécanique 700 forme un tenon sur la paroi 300.

La figure 7A illustre l'ancrage mécanique entre la pièce 200 et l'organe d'ancrage mécanique 700 de surmoulage faisant saillie sur la paroi 300. Les figures 7B et 7C représentent, grossis, deux plans de coupe A-A (7B), B-B (7C) indiqués sur la figure 7A.

L'invention concerne également une pièce de carrosserie 200 de véhicule automobile, réalisée en matière plastique, et comportant un élément de renforcement 100 selon l'invention.

L'élément de renforcement 100 forme un insert encapsulé par la matière plastique de la pièce de carrosserie 200 sur au moins une partie du contour 330 de la paroi 300, et de préférence sur le contour 330.

Selon un exemple de réalisation, la matière plastique de la pièce de carrosserie 200 recouvre la surface d'appui et comble les encoches 400.

Selon un mode de réalisation, la matière plastique de la pièce de carrosserie 200 recouvre la surface d'appui ainsi que le bord de la paroi 300, au niveau du contour 330.

### Liste des références

- 100: : élément de renforcement de la pièce de carrosserie 200
- 200: : pièce de carrosserie en matière plastique
- 300: : paroi de l'élément de renforcement 100
- 310: : première face de la paroi 300
- 320: : seconde face de la paroi 300, opposée à la première face 310
- 330: : contour délimitant la paroi 300.
- 400: : encoches d'ancrage mécanique de surmoulage de l'élément de renforcement 100
- 410: : reliefs définis entre deux encoches 400
- 500: : surface d'appui formant un prolongement de la paroi 300
- 700: : organe d'ancrage mécanique de surmoulage faisant saillie sur la paroi 300

## Revendications

1. Elément de renforcement (100) pour pièce de carrosserie (200) en matière plastique composite, formant un insert apte à être au moins partiellement surmoulé dans la pièce de carrosserie (200), l'élément de renforcement (100) comportant une paroi (300) délimitée par un contour (330), **caractérisé en ce que** l'élément de renforcement (100) est réalisé en matière plastique composite, et en **en ce qu'**au moins une partie du contour (330) comporte des encoches (400) d'ancrage mécanique de surmoulage.

2. Elément de renforcement (100) selon la revendication 1, dans lequel les encoches (400) d'ancrage mécanique ont une forme comportant un resserrement.

3. Elément de renforcement (100) selon l'une des revendications 1 et 2, dans lequel les encoches (400) d'ancrage mécanique ont une forme sensiblement évasée en partant du bord du contour (330).

4. Elément de renforcement (100) selon l'une des revendications précédentes, dans lequel les encoches (400) d'ancrage mécanique sont distribuées régulièrement sur ladite partie du contour (330).

5. Elément de renforcement (100) selon l'une des revendications précédentes, dans lequel la partie du contour (330) comportant les encoches (400) comporte une surface d'appui (500) formant un prolongement de ladite paroi (300.

6. Elément de renforcement (100) selon la revendication précédente, dans lequel ladite surface d'appui (500) a une épaisseur inférieure à l'épaisseur des reliefs (410).

7. Elément de renforcement (100) selon l'une des revendications précédentes, dans lequel la paroi (300) comporte une première face (310), et une seconde face (320) opposée à la première face, les encoches (400) d'ancrage mécanique de surmoulage étant formées sur la première face et/ou sur la seconde face.

8. Elément de renforcement (100) selon la revendication précédente, dans lequel un premier ensemble d'encoches (400) d'ancrage mécanique de surmoulage est formé sur la première face, un second ensemble d'encoches (400) d'ancrage mécanique de surmoulage est formé sur la seconde face, les encoches (400) d'une face étant en opposition des encoches (400) de l'autre face.

9. Elément de renforcement (100) selon l'une des revendications précédentes, dans lequel la paroi (300) de l'élément de renforcement (100) comporte un organe (700) d'ancrage mécanique de surmoulage faisant saillie sur la paroi (300) dans une direction localement non perpendiculaire à ladite paroi (300).

10. Elément de renforcement (100) selon la revendication précédente, dans lequel l'organe d'ancrage mécanique (700) forme un tenon sur la paroi (300).

11. Pièce de carrosserie (200) de véhicule automobile, réalisée en matière plastique, **caractérisée en ce qu'**elle comporte un élément de renforcement (100) selon l'une des revendications précédentes.

12. Pièce de carrosserie (200) selon la revendication précédente, dans laquelle l'élément de renforcement (100) forme un insert encapsulé par la matière plastique de la pièce de carrosserie (200) sur au moins une partie du contour (330) de la paroi (300), et de préférence sur tout le contour (330).

13. Pièce de carrosserie (200) selon la revendication précédente, dans laquelle la matière plastique de la pièce de carrosserie (200) recouvre la surface d'appui (500) et comble les encoches (400)

14. Pièce de carrosserie (200) selon la revendication précédente, dans laquelle la matière plastique de la pièce de carrosserie (200) recouvre le bord de la paroi (300), au niveau du contour (330).

15. Pièce de carrosserie (200) selon l'une des revendications 11 à 14, constituant une doublure de hayon.
